# EUROPEAN PATENT APPLICATION

(11) **EP 4 664 897 A1**
(43) Date of publication of application: **17.12.2025**
(21) Application number: 24752789.8
(22) Date of filing: 01.02.2024
(51) Int. Cl.: H04N 21/431, H04N 21/44, H04N 21/458

(54) **METHOD AND APPARATUS FOR PROCESSING SPECIAL-EFFECT PROP, AND ELECTRONIC DEVICE AND STORAGE MEDIUM**

(30) Priority: 10.02.2023 CN 202310186781
(71) Applicant: Beijing Zitiao Network Technology Co., Ltd., Beijing 100190 (CN)
(72) Inventor: WANG, Ziyue, Beijing 100028 (CN); WEI, Yantong, Beijing 100028 (CN); LIU, Gao, Beijing 100028 (CN); LI, Yameng, Beijing 100028 (CN); YIN, Xunpeng, Beijing 100028 (CN); WU, Yueqian, Beijing 100028 (CN)
(74) Representative: Isarpatent
(86) International application number: PCT/CN2024/075316
(87) International publication number: WO 2024/164933

(57) **Abstract**

Provided in the embodiments of the present disclosure are a method and apparatus for processing a special-effect prop, and an electronic device and a storage medium. The method comprises: receiving an editing trigger operation for a special-effect prop, and presenting a special-effect detail page corresponding to the triggered special-effect prop, wherein at least one special-effect information item is presented on the special-effect detail page; receiving a state editing operation for the special-effect information item, and determining an editing state of the special-effect information item, wherein the editing state is used for indicating whether the special-effect information item can be edited when the special-effect prop is applied; and in response to an update trigger operation for the special-effect prop, updating the special-effect prop on the basis of the editing state corresponding to the special-effect information item.

## Description

### CROSS-REFERENCE TO RELATED APPLICATIONS

The present application is based on and claims priority to Chinese Application No. 202310186781.7 filed on Feb. 10, 2023, the disclosure of which is incorporated by reference herein in its entirety.

### TECHNICAL FIELD

Embodiments of the present disclosure relate to computer vision technologies, and in particular an effect prop processing method and apparatus, an electronic device, and a storage medium.

### BACKGROUND

With the development of computer vision technologies, a variety of effect props are constantly emerging and widely used in various image processing scenarios.

In the related technologies, the production of effect props needs to be beneficial to professional prop producers. The production process of the props is complicated, and the production mode of the effect props has low universality and reusability, which greatly affects the production efficiency of the effect props.

### SUMMARY

The present disclosure provides an effect prop processing method and apparatus, an electronic device, and a storage medium, so as to simply and conveniently generate a variety of effect props.

According to a first aspect, an embodiment of the present disclosure provides an effect prop processing method, which comprises:
receiving an edit triggering operation for an effect prop, and presenting an effect detail page corresponding to the triggered effect prop, wherein at least one effect information item is presented in the effect detail page;
receiving a state editing operation for the effect information item, and determining an editing state of the effect information item, wherein the editing state is used for indicating whether the effect information item is editable when the effect prop is applied;
in response to an update triggering operation for the effect prop, updating the effect prop based on the editing state corresponding to the effect information item.

According to a second aspect, an embodiment of the present disclosure also provides an effect prop processing apparatus, which comprises:
an effect detail presenting module for receiving an edit triggering operation for an effect prop, and presenting an effect detail page corresponding to the triggered effect prop, wherein at least one effect information item is presented in the effect detail page;
an effect information editing module for receiving a state editing operation for the effect information item, and determining an editing state of the effect information item, wherein the editing state is used for indicating whether the effect information item is editable when the effect prop is applied;
an effect prop updating module for updating, in response to an update triggering operation for the effect prop, the effect prop based on the editing state corresponding to the effect information item.

According to a third aspect, an embodiment of the present disclosure also provides an electronic device, which comprises:
one or more processors;
a storage means for storing one or more programs,
wherein the one or more programs, when executed by the one or more processors, cause the one or more processors to implement the effect prop processing method according to any one of the embodiments of the present disclosure.

According to a fourth aspect, an embodiment of the present disclosure provides a storage medium containing computer-executable instructions, wherein the computer-executable instructions, when executed by a computer processor, are configured for executing the effect prop processing method according to any one of the embodiments of the present disclosure.

### BRIEF DESCRIPTION OF THE DRAWINGS

The above and other features, advantages and aspects of various embodiments of the present disclosure will become more apparent by referring to the following specific implementations when taken in conjunction with the accompanying drawings. Throughout the drawings, the same or similar reference numerals indicate the same or similar elements. It should be understood that the drawings are schematic, and the original and elements are not necessarily drawn to scale.
Fig. 1 is a schematic flow diagram of an effect prop processing method provided by an embodiment of the present disclosure;
Fig. 2 is a schematic flow diagram of another effect prop processing method provided by an embodiment of the present disclosure;
Fig. 3 is a schematic flow diagram of yet another effect prop processing method provided by an embodiment of the present disclosure;
Fig. 4 is a schematic structural diagram of an effect prop processing apparatus provided by an embodiment of the present disclosure;
Fig. 5 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be implemented in various forms and should not be construed as limited to the embodiments set forth here, but rather, these embodiments are provided for a more thorough and complete understanding of the present disclosure. It should be understood that the drawings and embodiments of the present disclosure are only used for exemplary purposes, and are not used to limit the protection scope of the present disclosure.

It should be understood that the steps described in the method implementations of the present disclosure can be performed in a different order and/or in parallel. Furthermore, the method implementations can include additional steps and/or omit performing the shown steps. The scope of the present disclosure is not limited in this respect.

As used herein, the term "including" and its variants are open-ended including, that is, "including but not limited to". The term "based on" is "at least partially based on"; the term "one embodiment" means "at least one embodiment"; the term "another embodiment" means "at least one other embodiment"; the term "some embodiments" means "at least some embodiments". Related definitions of other terms will be given in the following description.

It should be noted that "first", "second", and other concepts mentioned in the present disclosure are only used to distinguish different means, modules or units, and are not used to limit the order or interdependence of the functions performed by these means, modules or units.

It should be noted that the modifications of "a" and "a plurality" mentioned in the present disclosure are schematic rather than limiting, and those skilled in the art should understand that unless the context clearly indicates otherwise, they should be understood as "one or a plurality".

Names of messages or information exchanged among a plurality of means in the implementations of the present disclosure are only used for illustrative purposes, and are not used to limit the scope of these messages or information.

It can be understood that before the technical solutions disclosed in various embodiments of the present disclosure are used, users should be informed of the types, scope of use, use scenarios, etc. of personal information involved in the present disclosure in an appropriate way according to relevant laws and regulations, and the authorization of users should be obtained.

For example, in response to receiving the user's active request, prompt information is sent to the user to clearly remind the user that the requested operation will need to acquire and use the user's personal information. Therefore, the user can independently choose whether to provide personal information to software or hardware such as the electronic device, the application, the server or the storage medium that perform the operations of the technical solutions of the present disclosure according to the prompt information.

As an optional but non-limiting implementation, in response to receiving the user's active request, the way to send the prompt information to the user can be, for example, a pop-up window, in which the prompt information can be presented in text. In addition, the pop-up window can also carry a selection control for the user to choose "agree" or "disagree" to provide personal information to the electronic device.

It can be understood that the above process of notification and acquisition of user authorization is only schematic, and does not limit the implementation of the present disclosure. Other ways to meet relevant laws and regulations can also be applied to the implementation of the present disclosure.

It can be understood that the data involved in the present technical solution (including but not limited to the data itself, data acquisition or use) shall comply with the requirements of corresponding laws, regulations and relevant regulations.

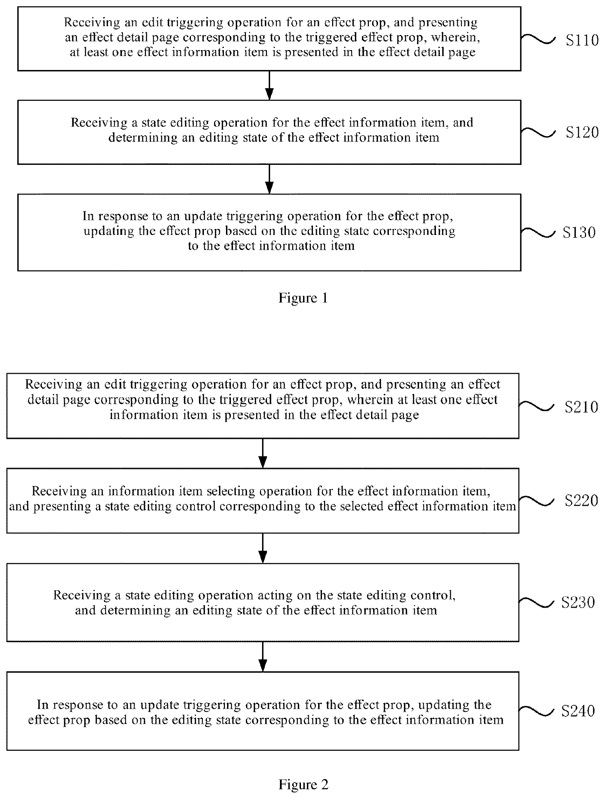

Fig. 1 is a schematic flow diagram of an effect prop processing method provided by an embodiment of the present disclosure. The embodiment of the present disclosure is suitable for circumstances where an effect prop is edited to generate a new effect prop. The effect prop processing method can be executed by an effect prop processing apparatus. The apparatus can be implemented in the form of software and/or hardware, or alternatively, by an electronic device. The electronic device can be a mobile terminal, a PC terminal, a server, or the like.

As shown in Fig. 1, the method of the present embodiment can specifically include:
S110: receiving an edit triggering operation for an effect prop, and presenting an effect detail page corresponding to the triggered effect prop, wherein at least one effect information item is presented in the effect detail page.

The prop adding operation can be understood as a triggering operation of determining the effect prop to be presented, which is used for adding an effect information item of the effect prop to the effect detail page for presentation after triggering. The effect detail page can be understood as a page for presenting effect detail information of the effect prop. The effect information item can be understood as one or more items of information contained in the effect detail information. In other word, the effect detail information can be presented in form of one or more effect information items.

It can be understood that the effect information item presented in the effect detail page can be one or more effect information items. The specific content and number of effect information items are associated with the effect props. The effect information items of different effect props can be the same or different.

Illustratively, the effect information items can include information items associated with effect elements contained in the effect prop and/or information items for performing image processing on images to which the effect prop is applied, and the like.

The information item associated with the effect element contained in the effect prop can be information items for presenting a single effect element and its associated rendering information, or an information item for presenting a combination of a plurality of effect elements and rendering information associated with the combination. Optionally, if the effect prop contains two or more effect elements, the information items associated with the effect elements can be determined according to the presentation information of the effect elements in the image to be processed. Illustratively, the presentation information can be a presentation position of the effect element in the image to be processed or an action object of the effect element in the image to be processed.

The information item for performing image processing on the image to which the effect prop is applied can be an information item for performing image processing on the whole or part of the image to which the effect prop is applied. Illustratively, the information item for performing image processing on the image to which the effect prop is applied can be at least one of image processing effects such as filters, beauty, ugliness, stylization, and deformation, applied to the whole or part of the image. Each image processing effect can correspond to one or more preset image processing algorithms. The image processing algorithms include traditional algorithms and pre-trained artificial intelligence models.

Optionally, the receiving an edit triggering operation for an effect prop includes: receiving a prop triggering operation acting on the effect prop, and presenting a prop editing control corresponding to the effect prop; receiving a control triggering operation acting on the prop editing control.

The prop triggering operation can be understood as an operation for determining the effect prop to be processed and presenting the prop editing control of the effect prop. The prop editing control can be understood as for triggering an operation of determining the effect prop as the effect prop to be edited and presenting the effect detail page for editing the effect prop. Illustratively, the receiving a prop triggering operation acting on the effect prop can be receiving a selecting operation on the effect prop, such as receiving an operation of clicking the effect prop input based on the left or right key of an input device.

Optionally, the receiving an edit triggering operation for an effect prop includes: receiving an operation of dragging the effect prop to a preset editing area, or receiving an effect prop adding operation acting on the preset editing area. Further, the effect prop added in the preset editing area is taken as the triggered effect prop.

The preset editing area can be a preset area for determining the effect prop to be edited. Illustratively, the preset editing area can be part or the whole area of the effect production page. The effect production page can be a page for producing the effect prop in the effect production tool.

Optionally, the receiving an edit triggering operation for an effect prop includes: presenting an effect production page in response to an effect production triggering operation, wherein the effect production page presents an effect prop adding control; receiving a control triggering operation acting on the effect prop adding control, and presenting at least one or more effect props; receiving a selecting operation for the effect prop. Further, the selected effect prop is taken as the triggered effect prop.

In practical application scenarios, there are many kinds of effect props, and their implementation forms are different. Accordingly, the effect detail information contained in the effect props is often different. In the embodiment of the present disclosure, the effect detail information of the effect prop can be packaged in a prop package of the effect prop. Optionally, the presenting an effect detail page corresponding to the triggered effect prop includes: acquiring an original prop package of the triggered effect prop, parsing the original prop package to obtain the effect information item corresponding to the effect prop, and presenting the effect information item in the effect detail page.

Illustratively, the parsing the original prop package to obtain the effect information item corresponding to the effect prop can specifically be detecting the effect detail information in the original prop package based on a plurality of preset effect information items, and determining sub-information corresponding to each effect information item in the effect detail information. Further, the sub-information corresponding to each effect information item updates the effect information item, thereby obtaining the effect information item corresponding to the effect prop.

By adopting the present technical solution, the effect detail information of the effect prop can be acquired simply, quickly and effectively by parsing the original prop package of the effect prop. Moreover, the effect detail information in the original prop package is parsed into one or more effect information items and presented in the effect detail page, so that users can clearly and conveniently understand the specific contents of the effect prop using the presentation information of the effect detail page, which provides convenience for subsequent editing for the effect information item.

S120: receiving a state editing operation for the effect information item, and determining an editing state of the effect information item.

The state editing operation can be understood as an operation for determining the editing state of the effect information item after being triggering. The editing state can be understood as indicating whether the effect information item is editable when the effect prop is applied. In other words, in the application scenario of the effect prop, whether to authorize the users who apply the effect prop for the function of re-editing the rendering parameter of the effect information item of the effect prop, that is, whether to allow the users who apply the effect prop to re-edit, can be determined from the editing state of the effect information item of the effect prop. Illustratively, the editing state of the effect information item includes an editable state and an uneditable state.

In the embodiment of the present disclosure, the authority for editing the effect prop provided to users can be personalized by editing the state of the effect information item. In the case where the editing state of the effect information item is the editable state, users can edit the effect information corresponding to the effect information item; in the case where the editing state of the effect information item is the uneditable state, users cannot edit the effect information corresponding to the effect information item, where the effect information item is presented in the original presentation mode set in the effect prop.

For example, the effect prop includes text information, picture information and filter information. Assuming that the editing state of text information and picture information is set to the editable state and the editing state of filter information is set to the uneditable state, users can edit the text information and/or picture information of the effect prop according to their own requirements, such as replacing text information, deleting text information, adding text information or replacing a picture. However, users cannot change the filter information of the effect prop. It should be noted that the technical solution of the embodiment of the present disclosure can be used to set which effect information items can be edited by users and which effect information items cannot be edited by users, but it does not limit how users can edit the effect information items in the editable state.

Optionally, the receiving a state editing operation for the effect information item includes: receiving a preset triggering operation acting on the effect information item or receiving an operation acting on a previously set state editing control corresponding to the effect information item. The preset triggering operation can be understood as a previously set operation for editing the editing state of the effect information item after triggering the effect information item. Illustratively, the preset triggering operation can specifically be a previously set operating mode for the effect information item. For example, it can be an information item selecting operation acting on the effect information item, wherein the information item selecting operation includes an operation of selecting the effect information item and an operation of unselecting the effect information item.

It should be noted that there can be one or more state editing controls corresponding to the effect information item. In the case where there are a plurality of rendering parameters corresponding to the effect information item, the state editing controls corresponding to one or more rendering parameters can be set.

Specifically, after the state editing operation for the effect information item is received, the editing state of the effect information item is determined based on the state editing operation, and the users' requirements can be accurately responded based on the interactive operation input by users.

S130: in response to an update triggering operation for the effect prop, updating the effect prop based on the editing state corresponding to the effect information item.

The update triggering operation can be understood as an operation for generating a new effect prop after being triggered.

Specifically, in the case where the editing state corresponding to the effect information item changes, the information associated with the editing state of the effect information item in the prop package of the effect prop is updated, thereby updating the effect prop. Illustratively, the editing state corresponding to the effect information item can be updated with the annotation file corresponding to the effect information item.

Optionally, after updating the effect prop based on the editing state corresponding to the effect information item, it is also possible to store the prop package of the updated effect prop in a preset storage space, which facilitates the application and reuse of the updated effect prop.

According to the technical solution of the embodiment of the disclosure, by receiving the edit triggering operation for the effect prop and presenting the effect detail page corresponding to the triggered effect prop, the reuse of the existing effect prop is realized, and the production time of the effect prop is saved; by receiving the state editing operation for the effect information item of the effect prop and determining the editing state of the effect information item, wherein the editing state is used for indicating whether the effect information item is editable when the effect prop is applied, the interactive modes between users and the effect props are enriched and differentiated interactive modes can be provided on the basis of the existing effect props; by updating, in response to the update triggering operation for the effect prop, the effect prop based on the editing state corresponding to effect information item, a variety of effect props are derived on the basis of the existing effect props. It solves the problems of low universality and reusability of the production mode and low production efficiency of the effect props, enriches presentation modes of effect props, generates the effects of effect props simply and quickly, and improves the production experience of effect props for users.

Fig. 2 is a schematic flow diagram of another effect prop processing method provided by an embodiment of the present disclosure. On the basis of the above embodiment, the technical solution of the present embodiment refines the input mode of the state editing operation. Optionally, the receiving a state editing operation for the effect information item includes: receiving an information item selecting operation for the effect information item, presenting a state editing control corresponding to the selected effect information item, and receiving a state editing operation acting on the state editing control. The specific implementation can refer to the description of the present embodiment. The technical features which are the same as or similar to those in the aforementioned embodiment are not described here.

As shown in Fig. 2, the method of the present embodiment can specifically include:
S210: receiving an edit triggering operation for an effect prop, and presenting an effect detail page corresponding to the triggered effect prop, wherein at least one effect information item is presented in the effect detail page.
S220: receiving an information item selecting operation for the effect information item, and presenting a state editing control corresponding to the selected effect information item.

The information item selecting operation can be understood as an operation for indicating whether the effect information item is selected. The state editing control can be understood as a control for editing the editing state of the effect information item.

In the embodiment of the present disclosure, there are various representations of the state editing control. Illustratively, the state editing control can be a state selecting control for selecting the editing state of the effect information item, or a state switching control for switching the editing state of the effect information item, or a state inputting control for inputting the editing state of the effect information item, or the like.

Illustratively, the state editing control can be a control provided independently of the existing information of the effect information item or a control integrated with the existing information of the effect information item. For example, the state editing control can be integrated in the identification information of the effect information item or integrated in the identification information of the rendering parameters of the effect information item. For example, when the effect information item is effect mapping and the rendering parameter corresponding to the effect information item includes texture and/or material, the state editing control can be a control identified by texture and/or a control identified by material.

Correspondingly, the receiving an information item selecting operation for the effect information item includes: receiving a selecting operation acting on a state selecting control corresponding to the effect information item; or, receiving a selecting operation acting on a state selecting control corresponding to the effect information item; or, receiving a state inputting operation acting on a state inputting control corresponding to the effect information item; or the like.

Optionally, the presenting a state editing control corresponding to the selected effect information item includes: presenting at least one rendering parameter corresponding to the selected effect information item and a state editing control corresponding to the at least one rendering parameter. By adopting the present technical solution, setting of the editing state corresponding to a single rendering parameter is enabled, so that the editing mode of the effect prop is more refined.

The rendering parameter can be understood as the display parameter of the effect information item in the image to which the effect prop is applied. There can be one or more rendering parameters corresponding to each effect information item.

It can be understood that the rendering parameter corresponding to the effect information item is associated with the effect prop. The rendering parameter corresponding to each effect information item in the effect prop can be set according to the actual situation in the process of producing the effect prop, and the specific content of the rendering parameter is not limited here. Illustratively, the rendering parameter corresponding to the effect information item can be at least one of brightness, color, texture, material, filter parameter, beautification degree, transparency and other parameters.

In the embodiment of the present disclosure, the state editing control can be a state editing control corresponding to each rendering parameter, or a state editing control corresponding to a plurality of rendering parameters. In other words, the corresponding relationship between the rendering parameter and the state editing control can be a one-to-one, many-to-one or one-to-many relationship.

S230: receiving a state editing operation acting on the state editing control, and determining an editing state of the effect information item.

Illustratively, the state editing operation acting on the state editing control includes: an operation of triggering the state editing control based on a preset trigger mode. The preset trigger mode can be a press or click, and further, it can also include the trigger times and/or continuous trigger time within a preset time.

Specifically, after the state editing operation acting on the state editing control is received, control setting information of the state editing control is acquired, and then the editing state of the effect information item is determined according to the control setting information. The control setting information can be understood as indicating the state of the state editing control. The state of the state editing control corresponds to the editing state of the effect information item.

S240: in response to an update triggering operation for the effect prop, updating the effect prop based on the editing state corresponding to the effect information item.

According to the technical solution of the embodiment of the present disclosure, by receiving an information item selecting operation for the effect information item, presenting a state editing control corresponding to the selected effect information item, then receiving a state editing operation acting on the state editing control, and determining an editing state of the effect information item, the differentiated setting of the editing state for the effect information item is enabled, and the setting of the editing state is realized by operating the state editing control, so that the interactive mode is simple, the personalized requirements of users can be met, and the interactive experience of users can be effectively improved.

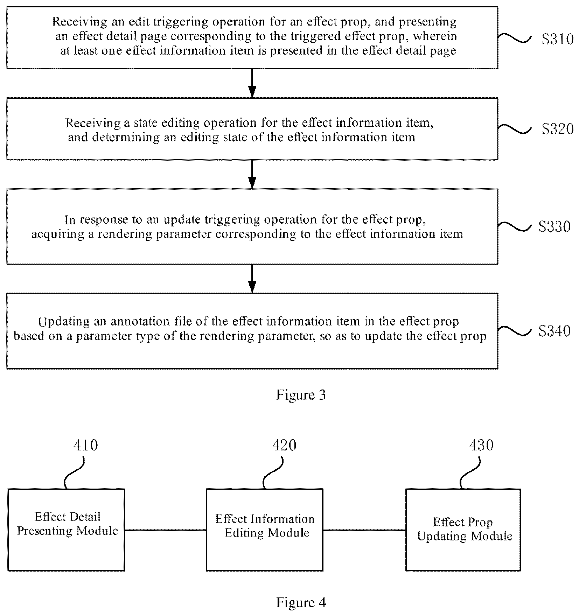

Fig. 3 is a schematic flow diagram of yet another effect prop processing method provided by an embodiment of the present disclosure. On the basis of the above embodiment, the technical solution of the present embodiment further refines how to update the effect prop. Optionally, the updating the effect prop based on the editing state corresponding to the effect information item includes: acquiring a rendering parameter corresponding to the effect information item, and updating an annotation file of the effect information item in the effect prop based on a parameter type of the rendering parameter, so as to update the effect prop. The specific implementation can refer to the description of the present embodiment. The technical features which are the same as or similar to those in the aforementioned embodiment are not described here.

As shown in Fig. 3, the method of the present embodiment can specifically include:
S310: receiving an edit triggering operation for an effect prop, and presenting an effect detail page corresponding to the triggered effect prop, wherein at least one effect information item is presented in the effect detail page.
S320: receiving a state editing operation for the effect information item, and determining an editing state of the effect information item.
S330: in response to an update triggering operation for the effect prop, acquiring a rendering parameter corresponding to the effect information item.

Optionally, it is possible to acquire an original prop package of the triggered effect prop, parse the original prop package to obtain an effect information item corresponding to the effect prop and a rendering parameter corresponding to the effect information item.

S340: updating an annotation file of the effect information item in the effect prop based on a parameter type of the rendering parameter, so as to update the effect prop.

The annotation file can be understood as a file used for describing whether the effect information item in the effect prop is editable and the edit interactive logic of the effect information item. It can be understood that the format of the annotation file and its contents can be determined according to the effect prop. For example, it is possible to previously define a frame of the annotation file of the effect information item according to the effect detail information of the effect prop, and then form the annotation file by filling the frame. Optionally, the annotation file of the effect information item can be an independent file corresponding to the effect information item. It is also possible to integrate the annotation files of a plurality of effect information items into a general annotation file corresponding to the effect prop.

In the embodiment of the present disclosure, before the annotation file of the effect information item in the effect prop is updated based on the parameter type of the rendering parameter, the parameter type of the rendering parameter can be determined first. Optionally, the parameter type of the rendering parameter can be determined according to a key field corresponding to the rendering parameter. Illustratively, the parameter type of the rendering parameter can be a text type, or a picture type, or the like.

Specifically, it is possible to determine interface presentation information of the effect information item in the effect prop based on the parameter type of the rendering parameter, and then, update the annotation file of the effect information item based on the interface presentation information, so as to update the effect prop.

The interface presentation information can be understood as visualization information of the effect information item in the application scenario of the effect prop. Specifically, the interface presentation information can be an interactive component of the effect information item displayed on a visualization interface. In the case where the effect information item is in the editable state, the interface presentation information can include rendering parameters that users are authorized to edit and the presentation forms of the rendering parameters. Illustratively, the rendering parameter can include at least one of picture, text, color, size and other parameters. The presentation forms of the rendering parameters can include at least one of a text input, a slider, a selecting control, a switching control, a palette, and etc.

In the embodiment of the present disclosure, optionally, a corresponding relationship between the parameter type and the interface presentation information is previously established. Illustratively, the corresponding relationship between the parameter type and the interface presentation information can be one-to-one relationship or many-to-one relationship. Further, the determining interface presentation information of the effect information item in the effect prop based on the parameter type of the rendering parameter can include: determining interface presentation information of the effect information item in the effect prop based on the previously established corresponding relationship between the parameter type and the interface presentation information and the parameter type of the rendering parameter. Specifically, based on the previously established corresponding relationship between the parameter type and the interface presentation information, the interface presentation information corresponding to the parameter type of the rendering parameter is looked up as the interface presentation information of the effect information item in the effect prop.

Optionally, the updating the annotation file of the effect information item based on the interface presentation information includes: acquiring a predefined annotation field corresponding to the interface presentation information, adding the annotation field to a predefined annotation file frame, and generating the annotation file of the effect information item.

The predefined annotation field can be understood as a previously defined code field for building interface presentation information. The annotation file frame is a code framework that cooperates with the annotation field to generate the interface presentation information.

Specifically, the corresponding relationship between the interface presentation information and the annotation field can be previously established. Further, a predefined annotation field corresponding to the interface presentation information is acquired based on the previously established corresponding relationship between the interface presentation information and the annotation field.

According to the technical solution of the embodiment of the present disclosure, by acquiring the rendering parameter corresponding to the effect information item after receiving the update triggering operation for the effect prop, the latest setting information of the effect prop is acquired. Further, the annotation file of the effect information item in the effect prop is automatically updated based on the parameter type of the rendering parameter, so that the updating of the effect prop is realized without manual operation by users, and the professional requirements for users are relatively low, and the applicability is wider.

Fig. 4 is a schematic structural diagram of an effect prop processing apparatus provided by an embodiment of the present disclosure. As shown in Fig. 4, the effect prop processing apparatus includes: an effect detail presenting module 410, an effect information editing module 420, and an effect prop updating module 430.

The effect detail presenting module 410 is used for receiving an edit triggering operation for an effect prop, and presenting an effect detail page corresponding to the triggered effect prop, wherein at least one effect information item is presented in the effect detail page; the effect information editing module 420 is used for receiving a state editing operation for the effect information item, and determining an editing state of the effect information item, wherein the editing state is used for indicating whether the effect information item is editable when the effect prop is applied; the effect prop updating module 430 is used for updating, in response to an update triggering operation for the effect prop, the effect prop based on the editing state corresponding to the effect information item.

According to the technical solution of the embodiment of the disclosure, by receiving an edit triggering operation for an effect prop and presenting an effect detail page corresponding to the triggered effect prop, the reuse of the existing effect props is realized, and the production time of the effect props is saved; by receiving a state editing operation for the effect information item of the effect prop, and determining an editing state of the effect information item, wherein the editing state is used for indicating whether the effect information item is editable when the effect prop is applied, the interactive modes between users and the effect props are enriched and differentiated interactive modes can be provided on the basis of the existing effect props; by updating, in response to an update triggering operation for the effect prop, the effect prop based on the editing state corresponding to the effect information item, a variety of effect props are derived on the basis of existing effect props. It solves the problems of low universality and reusability of the production mode and low production efficiency of the effect props, enriches presentation modes of effect props, generates effect props simply and quickly, and improves the production experience of effect props for users.

On the basis of any optional technical solution in the embodiment of the present disclosure, the effect information editing module can include: an editing control presenting unit and an editing operation inputting unit.

The editing control presenting unit is used for receiving an information item selecting operation for the effect information item, and presenting a state editing control corresponding to the selected effect information item; the editing operation inputting unit for receiving a state editing operation acting on the state editing control.

On the basis of any optional technical solution in the embodiment of the present disclosure, the editing control presenting unit can be specifically used for: presenting at least one rendering parameter corresponding to the selected effect information item and a state editing control corresponding to the at least one rendering parameter.

On the basis of any optional technical solution in the embodiment of the present disclosure, the effect prop updating module can be specifically used for: acquiring a rendering parameter corresponding to the effect information item, and updating an annotation file of the effect information item in the effect prop based on a parameter type of the rendering parameter, so as to update the effect prop.

On the basis of any optional technical solution in the embodiment of the present disclosure, the effect prop updating module can include: an interface presentation determining unit and an annotation file updating unit.

The interface presentation determining unit is used for determining interface presentation information of the effect information item in the effect prop based on the parameter type of the rendering parameter; the annotation file updating unit is used for updating the annotation file of the effect information item based on the interface presentation information.

On the basis of any optional technical solution in the embodiment of the present disclosure, the annotation file updating unit can be specifically used for: acquiring a predefined annotation field corresponding to the interface presentation information, adding the annotation field to a predefined annotation file frame, and generating the annotation file of the effect information item.

On the basis of any optional technical solution in the embodiment of the present disclosure, the effect detail presenting module can be used for: acquiring an original prop package of the triggered effect prop, parsing the original prop package to obtain the effect information item corresponding to the effect prop, and presenting the effect information item in the effect detail page.

On the basis of any optional technical solution in the embodiment of the present disclosure, the effect information items include information items associated with effect elements contained in the effect prop and/or information items for performing image processing on images to which the effect prop is applied.

The effect prop processing apparatus provided by the embodiment of the present disclosure can execute the effect prop processing method provided by any embodiment of the present disclosure, and has corresponding functional modules and beneficial effects for executing the effect prop processing method.

It is worth noting that each unit and module included in the above apparatus are only divided according to functional logic, but it is not limited to the above division, as long as the corresponding functions can be realized. In addition, the specific names of the functional units are only for the convenience of distinguishing each other, and are not used to limit the protection scope of the embodiment of the present disclosure.

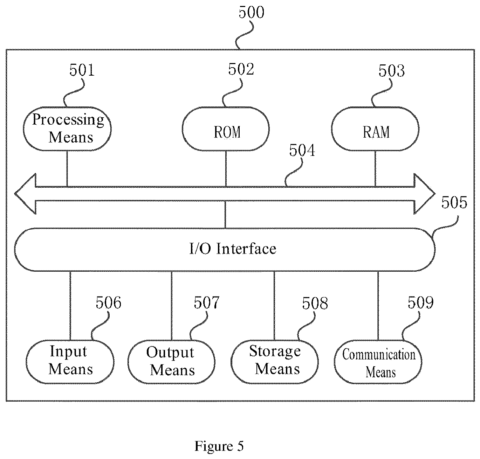

Fig. 5 is a schematic structural diagram of an electronic device provided by an embodiment of the present disclosure. Reference is now made to Fig. 5, which shows a schematic structural diagram of an electronic device (e.g., a terminal device or a server in Fig. 5) 500 suitable for implementing an embodiment of the present disclosure. The terminal device in the embodiment of the present disclosure can include, but are not limited to, a mobile terminal such as a mobile phone, a notebook computer, a digital broadcast receiver, a Personal Digital Assistant (PDA), a Tablet Computer (PAD), a Portable Media Player (PMP), and a vehicle-mounted terminal (such as a vehicle-mounted navigation terminal), as well as a fixed terminal such as a digital TV and a desktop computer. The electronic device shown in Fig. 5 is only an example, and should not bring any limitation to the functions and application scope of the embodiments of the present disclosure.

As shown in Fig. 5, the electronic device 500 can include a processing means (such as a central processor, or a graphics processor) 501, which can perform various appropriate actions and processes according to a program stored in a Read-Only Memory (ROM) 502 or a program loaded from a storage means 508 into a Random Access Memory (RAM) 503. In the RAM 503, various programs and data required for the operation of the electronic device 500 are also stored. The processing means 501, the ROM 502 and the RAM 503 are connected to each other through a bus 504. An edit/output (I/O) interface 505 is also connected to the bus 504.

Generally, the following means can be connected to the I/O interface 505: an input means 506 including, for example, a touch screen, a touch pad, a keyboard, a mouse, a camera, a microphone, an accelerometer, and a gyroscope; an output means 507 including, for example, a Liquid Crystal Display (LCD), a speaker, and a vibrator; a storage means 508 including, for example, a magnetic tape, and a hard disk; and a communication means 509. The communication means 509 can allow the electronic device 500 to perform wireless or wired communication with other devices to exchange data. Although Fig. 5 shows the electronic device 500 with various means, it should be understood that it is not required to implement or provide all the means shown. More or fewer means can alternatively be implemented or provided.

In particular, according to an embodiment of the present disclosure, the process described above with reference to the flow diagram can be implemented as a computer software program. For example, an embodiment of the present disclosure includes a computer program product including a computer program carried on a non-transitory computer-readable medium, which contains program codes for executing the method shown in the flow diagram. In such an embodiment, the computer program can be downloaded and installed from the network by the communication means 509, or installed from the storage means 508 or from the ROM 502. When the computer program is executed by the processing means 501, the above functions defined in the method of the embodiment of the present disclosure are performed.

Names of messages or information exchanged among a plurality of means in the implementations of the present disclosure are only used for illustrative purposes, and are not used to limit the scope of these messages or information.

The electronic device provided by the embodiment of the present disclosure belongs to the same inventive concept as the effect prop processing method provided by the above embodiment, and the technical details not described in detail in the present embodiment can refer to the above embodiment, and the present embodiment has the same beneficial effects as the above embodiment.

An embodiment of the present disclosure provides a computer storage medium storing thereon a computer program, which, when executed by a processor, implements the effect prop processing method provided in the above embodiment.

It should be noted that the computer-readable medium mentioned above in the present disclosure can be a computer-readable signal medium or a computer-readable storage medium or any combination of the two. The computer-readable storage medium can be, for example, but not limited to, an electrical, magnetic, optical, electromagnetic, infrared, or semiconductor system, apparatus or device, or a combination of any of the above. More specific examples of the computer-readable storage medium can include, but are not limited to, an electrical connection with one or more wires, a portable computer disk, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the above. In the present disclosure, the computer-readable storage medium can be any tangible medium containing or storing a program, which can be used by or in combination with an instruction execution system, apparatus or device. In the present disclosure, the computer-readable signal medium can include a data signal propagated in baseband or as part of a carrier wave, in which computer-readable program codes are carried. This propagated data signal can take many forms, including but not limited to an electromagnetic signal, an optical signal or any suitable combination of the above. The computer-readable signal medium can also be any computer-readable medium other than the computer-readable storage medium, which can send, propagate or transmit a program for use by or in connection with an instruction execution system, apparatus or device. The program codes contained in the computer-readable medium can be transmitted by any suitable medium, including but not limited to: wires, optical cables, RF(Radio Frequency), etc., or any suitable combination of the above.

In some implementations, the client and the server can communicate by using any currently known or future developed network protocol such as HyperText Transfer Protocol (HTTP), and can be interconnected with digital data communication in any form or medium (for example, a communication network). Examples of the communication network include a Local Area Network ("LAN"), a Wide Area Network ("WAN"), the Internet (for example, the Internet) and an end-to-end network (for example, an ad hoc end-to-end network), as well as any currently known or future developed networks.

The computer-readable medium can be contained in the above electronic device; or it can exist alone without being assembled into the electronic device.

The above computer-readable medium carries one or more programs, and the above one or more programs, when executed by the electronic device, cause the electronic device to: receive an edit triggering operation for an effect prop, and present an effect detail page corresponding to the triggered effect prop, wherein at least one effect information item is presented in the effect detail page; receive a state editing operation for the effect information item, and determine an editing state of the effect information item, wherein the editing state is used for indicating whether the effect information item is editable when the effect prop is applied; in response to an update triggering operation for the effect prop, updating the effect prop based on the editing state corresponding to the effect information item.

Computer program codes for performing the operations of the present disclosure can be written in one or more programming languages or a combination thereof, including but not limited to object-oriented programming languages, such as Java, Smalltalk, C++, and conventional procedural programming languages, such as "C" language or similar programming languages. The program codes can be completely executed on a user computer, partially executed on the user computer, executed as an independent software package, partially executed on the user computer and partially executed on a remote computer, or completely executed on the remote computer or a server. In the case involving a remote computer, the remote computer can be connected to a user computer through any kind of network, including a Local Area Network (LAN) or a Wide Area Network (WAN), or can be connected to an external computer (for example, through the Internet using an Internet service provider).

The flow diagrams and block diagrams in the drawings illustrate the architecture, functions and operations of possible implementations of the system, method and computer program product according to various embodiments of the present disclosure. In this regard, each block in the flow diagrams or block diagrams can represent a module, a program segment, or a part of codes that contains one or more executable instructions for implementing specified logical functions. It should also be noted that in some alternative implementations, the functions noted in the blocks can occur in a different order than those noted in the drawings. For example, two blocks shown in succession can actually be executed substantially in parallel, and they can sometimes be executed in the reverse order, depending on the functions involved. It should also be noted that each or a combination of blocks in the block diagrams and/or flow diagrams can be implemented by a dedicated hardware-based system that performs specified functions or operations, or by a combination of dedicated hardware and computer instructions.

The involved units described in the embodiments of the present disclosure can be implemented by software or hardware. The name of the unit does not constitute the limitation of the unit itself in some cases. For example, the first acquisition unit can also be described as "a unit that acquires at least two Internet protocol addresses".

The functions described above herein can be at least partially performed by one or more hardware logic components. For example, without limitation, exemplary types of hardware logic components that can be used include: a Field-Programmable Gate Array (FPGA), an Application-Specific Integrated Circuit (ASIC), an Application Specific Standard Product (ASSP), a System on Chip (SOC), a Complex Programmable Logic Device (CPLD) and so on.

In the context of the present disclosure, a machine-readable medium can be a tangible medium that can contain or store a program for use by or in connection with an instruction execution system, apparatus or device. The machine-readable medium can be a machine-readable signal medium or a machine-readable storage medium. The machine-readable medium can include, but is not limited to, an electronic, magnetic, optical, electromagnetic, infrared, or semiconductor system, apparatus or device, or any suitable combination of the above. More specific examples of the machine-readable storage medium can include an electrical connection based on one or more lines, a portable computer disk, a hard disk, a Random Access Memory (RAM), a Read-Only Memory (ROM), an Erasable Programmable Read-Only Memory (EPROM or flash memory), an optical fiber, a portable Compact Disk Read-Only Memory (CD-ROM), an optical storage device, a magnetic storage device, or any suitable combination of the above.

According to one or more embodiments of the present disclosure, [Example 1] provides an effect prop processing method, comprising:
receiving an edit triggering operation for an effect prop, and presenting an effect detail page corresponding to the triggered effect prop, wherein at least one effect information item is presented in the effect detail page;
receiving a state editing operation for the effect information item, and determining an editing state of the effect information item, wherein the editing state is used for indicating whether the effect information item is editable when the effect prop is applied;
in response to an update triggering operation for the effect prop, updating the effect prop based on the editing state corresponding to the effect information item.

According to one or more embodiments of the present disclosure, [Example 2] provides the method of Example 1, further comprising:
optionally, the receiving a state editing operation for the effect information item comprises:
receiving an information item selecting operation for the effect information item, presenting a state editing control corresponding to the selected effect information item, and receiving a state editing operation acting on the state editing control.

According to one or more embodiments of the present disclosure, [Example 3] provides the method of Example 2, further comprising:
optionally, the presenting a state editing control corresponding to the selected effect information item comprises:
presenting at least one rendering parameter corresponding to the selected effect information item and a state editing control corresponding to the at least one rendering parameter.

According to one or more embodiments of the present disclosure, [Example 4] provides the method of Example 1, further comprising:
optionally, the updating the effect prop based on the editing state corresponding to the effect information item comprises:
acquiring a rendering parameter corresponding to the effect information item, and updating an annotation file of the effect information item in the effect prop based on a parameter type of the rendering parameter, so as to update the effect prop.

According to one or more embodiments of the present disclosure, [Example 5] provides the method of Example 3, further comprising:
optionally, the updating an annotation file of the effect information item in the effect prop based on a parameter type of the rendering parameter comprises:
determining interface presentation information of the effect information item in the effect prop based on the parameter type of the rendering parameter, and updating the annotation file of the effect information item based on the interface presentation information.

According to one or more embodiments of the present disclosure, [Example 6] provides the method of Example 5, further comprising:
optionally, the updating the annotation file of the effect information item based on the interface presentation information comprises:
acquiring a predefined annotation field corresponding to the interface presentation information, adding the annotation field to a predefined annotation file frame, and generating the annotation file of the effect information item.

According to one or more embodiments of the present disclosure, [Example 7] provides the method of Example 1, further comprising:
optionally, the presenting an effect detail page corresponding to the triggered effect prop comprises:
acquiring an original prop package of the triggered effect prop, parsing the original prop package to obtain the effect information item corresponding to the effect prop, and presenting the effect information item in the effect detail page.

According to one or more embodiments of the present disclosure, [Example 8] provides the method of Example 1, further comprising:
optionally, the effect information items comprise information items associated with effect elements contained in the effect prop and/or information items for performing image processing on images to which the effect prop is applied.

According to one or more embodiments of the present disclosure, [Example 9] provides an effect prop processing apparatus, comprising:
an effect detail presenting module for receiving an edit triggering operation for an effect prop, and presenting an effect detail page corresponding to the triggered effect prop, wherein at least one effect information item is presented in the effect detail page;
an effect information editing module for receiving a state editing operation for the effect information item, and determining an editing state of the effect information item, wherein the editing state is used for indicating whether the effect information item is editable when the effect prop is applied;
an effect prop updating module for updating, in response to an update triggering operation for the effect prop, the effect prop based on the editing state corresponding to the effect information item.

The above description is only the preferred embodiments of the present disclosure and the explanation of the applied technical principles. It should be understood by those skilled in the art that the disclosure scope involved in the present disclosure is not limited to the technical solution formed by the specific combination of the above technical features, but also covers other technical solutions formed by any combination of the above technical features or their equivalent features without departing from the above disclosure concept, for example, the technical solution formed by mutual replacement of the above features with technical features with similar functions disclosed in the present disclosure (but not limited to).

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of individual embodiments can also be combined in a single embodiment. On the contrary, various features described in the context of a single embodiment can also be implemented in a plurality of embodiments individually or in any suitable sub-combination.

Although the subject matter has been described in language specific to structural features and/or methodological logical actions, it should be understood that the subject matter defined in the appended Claims is not necessarily limited to the specific features or actions described above. On the contrary, the specific features and actions described above are only exemplary forms of implementing the Claims.

## Claims

1. An effect prop processing method, comprising:
receiving an edit triggering operation for an effect prop, and presenting an effect detail page corresponding to the triggered effect prop, wherein at least one effect information item is presented in the effect detail page;
receiving a state editing operation for the effect information item, and determining an editing state of the effect information item, wherein the editing state is configured for indicating whether the effect information item is editable when the effect prop is applied; and
in response to an update triggering operation for the effect prop, updating the effect prop based on the editing state corresponding to the effect information item.

2. The effect prop processing method according to Claim 1, wherein the receiving a state editing operation for the effect information item comprises:
receiving an information item selecting operation for the effect information item, presenting a state editing control corresponding to the selected effect information item, and receiving a state editing operation acting on the state editing control.

3. The effect prop processing method according to Claim 2, wherein the presenting a state editing control corresponding to the selected effect information item comprises:
presenting at least one rendering parameter corresponding to the selected effect information item and a state editing control corresponding to the at least one rendering parameter.

4. The effect prop processing method according to Claim 1, wherein the updating the effect prop based on the editing state corresponding to the effect information item comprises:
acquiring a rendering parameter corresponding to the effect information item, and updating an annotation file of the effect information item in the effect prop based on a parameter type of the rendering parameter, so as to update the effect prop.

5. The effect prop processing method according to Claim 3, wherein the updating an annotation file of the effect information item in the effect prop based on a parameter type of the rendering parameter comprises:
determining interface presentation information of the effect information item in the effect prop based on the parameter type of the rendering parameter, and updating the annotation file of the effect information item based on the interface presentation information.

6. The effect prop processing method according to Claim 5, wherein the updating the annotation file of the effect information item based on the interface presentation information comprises:
acquiring a predefined annotation field corresponding to the interface presentation information, adding the annotation field to a predefined annotation file frame, and generating the annotation file of the effect information item.

7. The effect prop processing method according to Claim 1, wherein the presenting an effect detail page corresponding to the triggered effect prop comprises:
acquiring an original prop package of the triggered effect prop, parsing the original prop package to obtain the effect information item corresponding to the effect prop, and presenting the effect information item in the effect detail page.

8. The effect prop processing method according to Claim 1, wherein the effect information item comprises an information item associated with effect elements contained in the effect prop and/or an information item for performing image processing on images to which the effect prop is applied.

9. An effect prop processing apparatus, comprising:
an effect detail presenting module for receiving an edit triggering operation for an effect prop, and presenting an effect detail page corresponding to the triggered effect prop, wherein at least one effect information item is presented in the effect detail page;
an effect information editing module for receiving a state editing operation for the effect information item, and determining an editing state of the effect information item, wherein the editing state is configured for indicating whether the effect information item is editable when the effect prop is applied;
an effect prop updating module for updating, in response to an update triggering operation for the effect prop, the effect prop based on the editing state corresponding to the effect information item.

10. An electronic device, comprising:
one or more processors;
a storage means for storing one or more programs,
wherein the one or more programs, when executed by the one or more processors, cause the one or more processors to implement the effect prop processing method according to any one of Claims 1 to 8.

11. A storage medium containing computer-executable instructions, wherein the computer-executable instructions, when executed by a computer processor, execute the effect prop processing method according to any one of Claims 1 to 8.
